# EUROPEAN PATENT APPLICATION

(11) **EP 2 587 281 A1**
(43) Date of publication of application: **01.05.2013**
(21) Application number: 11798038.3
(22) Date of filing: 16.06.2011
(51) Int. Cl.: G02B 5/08, B32B 15/08, F24J 2/10

(54) **FILM MIRROR FOR SOLAR HEAT GENERATION AND PROCESS FOR PRODUCTION THEREOF, AND REFLECTION DEVICE FOR SOLAR HEAT GENERATION**

(30) Priority: 23.06.2010 JP 2010142372
(71) Applicant: Konica Minolta Advanced Layers, Inc., Hachioji-shi Tokyo 192-8505 (JP)
(72) Inventor: MOCHIZUKI, Makoto, Hachioji-shi Tokyo 192-8505 (JP)
(74) Representative: Gille Hrabal
(86) International application number: PCT/JP2011/063789
(87) International publication number: WO 2011/162153

(57) **Abstract**

A film mirror for use in the generation of a solar heat, which is characterized in that at least one resin layer, which is formed on the light incident side of a metal reflective layer comprising a silver layer, contains a triazine-type UV absorber and an UV absorber having absorption maximum in an UV-A region (320 to 400 nm), wherein each of the UV absorbers is contained in an amount of 1 mass% or more relative to the amount of a resin and the total amount of the UV absorbers in the resin layer is 15 mass% or less relative to the amount of the resin.

## Description

### FIELD OF THE INVENTION

The present invention relates to a film mirror for solar heat generation, a method of manufacturing the same, and a reflector for solar heat generation using the same.

### BACKGROUND ART

In recent years, various natural energies including coal energy, biomass energy, nuclear energy, wind energy and solar energy have been investigated as substitutes for fossil fuel energy such as petroleum and natural gas. Among them, solar energy is considered as a most stable and abundant natural energy as the substitutive energy for the fossil fuel energy. Solar energy which is a very promising substitutive energy is, however, supposed to be suffered from problems, from the viewpoint of actualization, in (1) low energy density, and (2) difficulties in storage and transmission.

As challenges to the problems in solar energy, one solution ever proposed is a method of condensing solar energy using a huge reflector, aiming at overcoming the problem of low energy density. Glass mirror has been used for the reflector, since the reflector is exposed to ultraviolet radiation and heat of sunlight, wind, rain, sandstorm and so forth. The glass mirror excellent in environment-proof performance is, however, prone to be broken during transportation, or needs a high-strength mount on which the mirror is mounted due to its heaviness, and thereby construction of a plant costs high.

As a solution to the problem, a method has been disclosed for replacing the glass mirror with a resin reflective sheet (see Patent Document 1, for example). The resin used in the method is, however, not durable against outer environment, and another problem is that, when a metal such as silver is used for the reflective layer, the resin allows water, steam, hydrogen sulfide and so forth to pass therethrough, to cause corrosion of silver. Adoption of the resin mirror has therefore been difficult.

On the other hand, from the viewpoint of obtaining a high reflectivity aiming at condensing sunlight, a method ever disclosed is such as suppressing lowering of transmissivity of light of a resin layer due to discoloring as a result of UV-induced degradation of resin, by adding a large amount of a benzotriazole-based ultraviolet light absorbing agent (also referred to as "UV absorber", hereinafter) to a resin layer disposed on the incident side of the silver reflective layer (see Patent Document 2, for example). Moreover, Japanese Laid-Open Patent Publication No. S61-154942 discloses a method of suppressing lowering of transmissivity of light of the resin layer, by stacking a layer containing an anticorrosive for silver over the silver reflective layer so as to suppress lowering of reflectivity due to corrosion of silver, and by additionally providing a benzotriazole-based UV absorbing layer over the anticorrosive layer.

It was, however, found that the method described in Patent Document 2 and so forth was not fully satisfactory in the weatherability, that a support-forming resin of a film mirror degraded as it was irradiated by sunlight, and that separation between the layers or distortion would occur. The separation between the layers and distortion are causative of lowering in regular reflectance of the film mirror, and degradation in generation efficiency as a consequence, so that they were urgent matters to be improved.

### PRIOR ART DOCUMENTS

### PATENT DOCUMENTS

Patent Document 1: Japanese Laid-Open Patent Publication No. 2005-59382
Patent Document 2: United States Patent No. 7,507,776B2

### SUMMARY OF THE INVENTION

### PROBLEMS TO BE SOLVED

The present invention was conceived to address the problems described in the above, an object of which is to provide a film mirror for solar heat generation capable of preventing lowering in the regular reflectance due to degradation of a support-forming resin which serves as the reflective layer, being lightweight and flexible, being excellent in lightfastness and weatherability, and having high regular reflectance of sunlight, a method of manufacturing the same, and a reflector for solar heat generation using the same.

### MEANS TO SOLVE THE PROBLEMS

The problems to be addressed by the present invention can be solved by the configurations below.

1. A film mirror for solar heat generation includes a metal reflective layer and at least one resin layer provided on an incident side of the metal reflective layer. The metal reflecting layer comprises a silver layer. The at least one resin layer contains a triazine-based UV absorber by 1% by mass of the resin and a UV absorber having an absorption maximum in a UV-A region (320 to 400 nm) by 1% by mass of the resin. A total content of the UV absorbers in the resin layer(s) is 15% or less by mass of the resin.

2. The film mirror for solar heat generation according to aspect 1, in which the UV absorber having the absorption maximum in the UV-A region (320 to 400 nm) is a benzotriazole-based UV absorber.

3. The film mirror for solar heat generation according to aspect 2, in which at least one resin layer contains both of the triazine-based UV absorber and the benzotriazole-based UV absorber.

4. The film mirror for solar heat generation according to aspect 3, in which the resin layer containing both of the triazine-based UV absorber and the benzotriazole-based UV absorber further contains an aliphatic diisocyanate-based crosslinking agent by 5 to 40% by mass of the resin and an antioxidant by 0.5 to 10% by mass of the resin.

5. The film mirror for solar heat generation according to aspect 3 or 4, in which the resin layer containing both of the triazine-based UV absorber and the benzotriazole-based UV absorber further contains an amino group-containing silane coupling agent by 0.1 to 10% by mass of the resin, and the resin layer is brought into contact with the metal reflective layer.

6. The film mirror for solar heat generation according to aspect 1, in which the triazine-based UV absorber and the UV absorber having the absorption maximum in the UV-A region (320 to 400 nm) are contained in different resin layers, respectively, the resin layer containing the triazine-based UV absorber is disposed on the incident side of the at least one resin layer containing the UV absorber having the absorption maximum in the UV-A region, and the total content of the UV absorbers in the resin layers is 1 to 15% by mass of the resin.

7. The film mirror for solar heat generation according to aspect 6, in which the UV absorber having the absorption maximum in the UV-A region (320 to 400 nm) is a benzotriazole-based UV absorber.

8. The film mirror for solar heat generation according to aspect 7, in which the resin layer containing one of the triazine-based UV absorber and the benzotriazole-based UV absorber further contains an aliphatic diisocyanate-based crosslinking agent by 5 to 40% by mass of the resin and an antioxidant by 0.5 to 10% by mass of the resin.

9. The film mirror for solar heat generation according to aspect 7 or 8, in which the resin layer containing one of the triazine-based UV absorber and the benzotriazole-based UV absorber further contains an amino group-containing silane coupling agent by 0.1 to 10% by mass of the resin, and the resin layer is brought into contact with the metal reflective layer.

10. A method for manufacturing the film mirror for solar heat generation according to any one of aspects 1 to 9, the method including forming the metal reflective layer by vapor deposition of silver.

11. A reflector for solar heat generation comprising the film mirror for solar heat generation according to any one of aspects 1 to 9, in which the film mirror is bonded with a metal support through an adhesive layer between the film mirror and the metal support.

### EFFECTS OF THE INVENTION

According to the present invention, there is provided a film mirror for solar heat generation, not causing degradation of a support-forming resin disposed on the counter-incident side of the silver layer, and capable of keeping a high regular reflectance over a long period, even if used as a film mirror for solar heat generation under very severe environments. It is supposedly ascribable to an effect obtained by providing a UV absorbing layer (resin layer containing UV absorbers) which contains a triazine-based UV absorber together with a UV absorber having an absorption maximum in the UV-A region (320 to 400 nm).

### BRIEF DESCRIPTION OF THE DRAWINGS

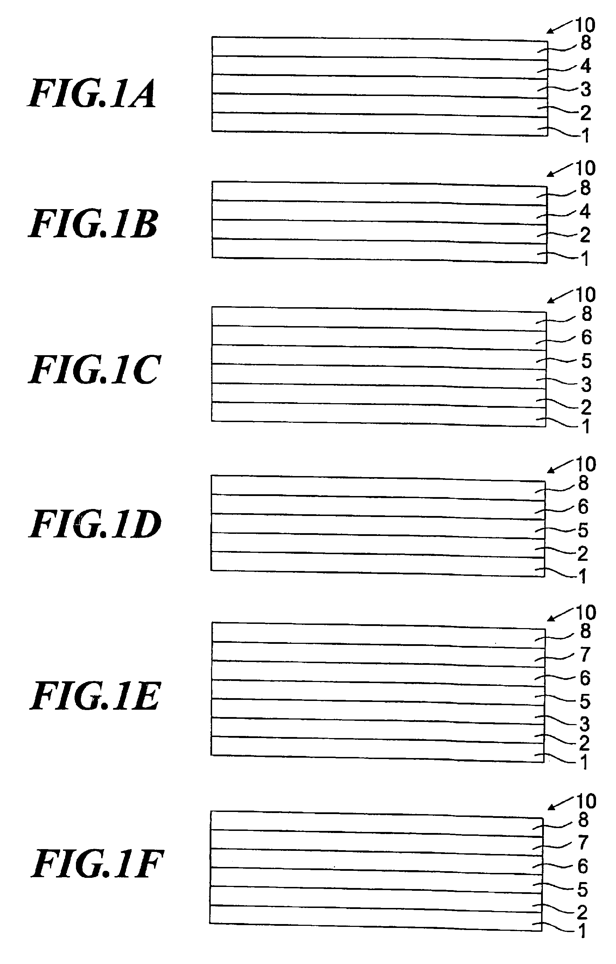

[FIG. 1A] FIG. 1A is a schematic cross-sectional view illustrating an exemplary configuration of the film mirror for solar heat generation of the present invention.
[FIG. 1B] FIG. 1B is a schematic cross-sectional view illustrating an exemplary configuration of the film mirror for solar heat generation of the present invention.
[FIG. 1C] FIG. 1C is a schematic cross-sectional view illustrating an exemplary configuration of the film mirror for solar heat generation of the present invention.
[FIG. 1D] FIG. 1D is a schematic cross-sectional view illustrating an exemplary configuration of the film mirror for solar heat generation of the present invention.
[FIG. 1E] FIG. 1E is a schematic cross-sectional view illustrating an exemplary configuration of the film mirror for solar heat generation of the present invention.
[FIG. 1F] FIG. 1F is a schematic cross-sectional view illustrating an exemplary configuration of the film mirror for solar heat generation of the present invention.

### EMBODIMENTS TO CARRY OUT THE INVENTION

The present inventor found out from our investigations that the degradation of the support-forming resin which structures the film mirror for solar heat generation was ascribable to UV-induced decomposition of low-molecular-weight components of resin, residual polymerization initiator or residual monomer contained in the support-forming resin layer. It was also found that light causative of decomposition of the above-described components was ultraviolet radiation in the UV-A region (320 to 400 nm) to the UV-B region (290 to 320 nm), and in particular light in the UV-B region (290 to 320 nm).

The problem becomes distinctive particularly when silver is used for the reflective layer. Silver is superior to aluminum or other metals in the reflectivity of visible light, but is incapable of reflecting light of 320 nm or shorter, and therefore allows the light in the UV-B region to transmit therethrough. It has conventionally been sufficient to consider the UV-induced degradation only about the layer on the incident side of the reflective layer, but it became clear that use of the silver reflective layer gave rise to another need to suppress the degradation of the layer disposed on the opposite side of the reflective layer induced by the light in the UV-B region transmitted through the silver reflective layer. It was also found that use of one types of organic UV absorber is insufficient for blocking the light in the UV-B region. For example, in the case where a benzotriazole-based compound is used as the UV absorber so as to ensure absorptivity in the UV-A region (320 to 400 nm), the light in the UV-B region (290 to 320 nm) transmits through the silver layer to thereby degrade the support-forming resin. It was also found that the benzotriazole-based UV absorber tends to be degraded by the light in the UV-B region, and to gradually lose the light blocking performance in the UV-A region with time. The present inventor then made a trial of using, as the UV absorber, a triazine-based compound which exhibits high absorptivity of the light in the UV-B region (290 to 320 nm) and is less prone to degrade even exposed by the light in the UV-B region. Addition of the triazine-based compound up to an amount sufficient for blocking the light in the UV-A to UV-B regions, however, strongly yellowed the UV absorbing layer due to the triazine-based compound, and unfortunately reduced the reflectivity in the visible light region.

Further investigations by the present inventor then revealed that combination of the UV absorber with an absorption maximum in the UV-A region (320 to 400 nm), such as the benzotriazole-based compound, with the triazine-based UV absorber was successful to ensure a sufficient level of absorptivity of UV in the UV-B region, and also to suppress the yellowing of the UV absorbing layer. It was consequently found that the support-forming resin may be suppressed from degrading, and thereby the regular reflectance may be prevented from lowering. It was also found that by blocking UV in the UV-B region by the triazine-based UV absorber, the UV absorber with an absorption maximum in the UV-A region (320 to 400 nm), such as benzotriazole-based compound, may be elongated in the service life in a synergistic manner, and may block the light in the UV-A to UV-B regions over a long period. It was also found that by using the benzotriazole-based UV absorber with an absorption maximum in the UV-A region (320 to 400 nm) as the UV absorber, and by disposing the layer containing the benzotriazole-based UV absorber in contact with the silver layer, the benzotriazole-based UV absorber functions as an anticorrosive to sulfidation.

The description below will detail embodiments of the present invention, without limiting the present invention.

The present inventor found out from diligent investigations that the problem of lowering in the regular reflectance of the film mirror, due to distortion of the resin base ascribable to UV induced degradation, may be solved by using a film mirror configured described below. The film mirror includes at least one resin layer formed on the incident side of a metal reflective layer, composed of a silver layer, contains 1% by mass or more each of a triazine-based UV absorber and a UV absorber with an absorption maximum in the UV-A region (320 to 400 nm), with a total content of the UV absorbers in the resin layer (s) of 15% by mass or less of resin. Or the film mirror includes resin layers formed on the incident side of the silver layer, and the triazine-based UV absorber and the UV absorber with an absorption maximum in the UV-A region (320 to 400 nm) are contained in different resin layers and the resin layer containing the triazine-based UV absorber is disposed on the incident side of at least one resin layer containing the UV absorber with an absorption maximum in the UV-A region.

This is supposedly because the UV absorbing layer stacked on the incident side of a silver-containing-metal layer or the silver layer absorbs UV in the UV-B region (290 to 320 nm) without lowering the reflectivity in the visible light region, to thereby suppress decomposition of low-molecular-weight components, residual polymerization initiator or residual monomer of the support-forming resin.

Since the silver layer (silver film) exhibits only a low level of reflectivity in this region, so that the low-molecular-weight components in the resin base, the residual polymerization initiator and the residual monomer may be suppressed from being decomposed, by allowing the triazine-based UV absorber to absorb UV in the UV-B region (290 to 320 nm). At the same time, also UV in the UV-A region (320 to 400 nm) causative of degradation of the resin, although more moderate than UV in the UV-B region (290 to 320 nm), may be absorbed by the UV absorber with an absorption maximum in this wavelength region. If UV ranging from the UV-A region (320 to 400 nm) to the UV-B region (290 to 320 nm) is to be absorbed solely by the triazine-based UV absorber, the amount of addition of the triazine-based UV absorber would increase, to thereby cause yellowing specific to the triazine-based UV absorber. This sort of yellowing will degrade the reflectivity in the visible light region.

On the other hand, by combining the triazine-based UV absorber with the UV absorber with an absorption maximum in the UV-A region (320 to 400 nm) as described in the above, it now becomes possible to absorb UV ranging from the UV-A region (320 to 400 nm) to the UV-B region (290 to 320 nm), while suppressing coloration. In addition, since the triazine-based UV absorber which is less prone to being degraded by UV can absorb UV, so that the UV absorber with an absorption maximum in the UV-A region (320 to 400 nm) which is more prone to be degraded may be elongated in the service life, and thereby the UV absorbing layer may be increased in the UV absorptivity in a synergistic manner. In addition, of the UV absorbers with an absorption maximum in the UV-A region (320 to 400 nm), the benzotriazole-based UV absorber functions as an anticorrosive for protecting silver, so that the silver layer, when brought into contact with a layer containing the benzotriazole-based UV absorber, may be suppressed from being corroded through sulfidation or oxidation.

If the diisocyanate-based crosslinking agent is contained in the resin layer containing the UV absorber, the resin layers may be improved in the strength and in the adhesiveness between them. If the antioxidant is added to the resin layer containing the UV absorber, oxidative cleavage of resin chain and decomposition of the UV absorber, caused by peroxy radical generated by photoirradiation, may be suppressed.

When the resin layer containing the UV absorber is brought into contact with the silver layer, addition of the amino group-containing silane coupling agent into the resin layer may largely improve the adhesiveness between the silver layer and the resin layer.

The individual constituents of the film mirror for solar heat generation of the present invention will be detailed below.
A film mirror for solar heat generation 10 is configured by, for example, a resin base 1, silver reflective layer 2, anti-corrosion layer 3, UV absorbing layer 4, UV absorbing layer 5, UV absorbing layer 6, UV absorbing layer 7, hard coat layer 8 and so forth, as illustrated in FIG. 1A to FIG. 1F.

### (Hard Coat Layer)

In the film mirror for solar heat generation of the present invention, a hard coat layer may be provided as an outermost layer. The hard coat layer in the present invention may be provided for the purpose of scratch-proofing.

The hard coat layer in the present invention may be configured by a binder composed of acrylic resin, urethane-based resin, melamine-based resin, epoxy-based resin, organosilicate compound, silicone-based resin or the like. Silicone-based resin and acrylic resin are particularly preferable from the viewpoints of hardness and durability. It is more preferable to adopt an active energy beam curable acrylic resin or thermosetting acrylic resin from the viewpoints of hardness, flexibility and productivity.

The active energy beam curable acrylic resin or thermosetting acrylic resin is a composition which contains, as a polymerizable and curable component, a multi-functional acrylate, acrylic oligomer or reactive diluent. The acrylic resin may optionally contain a photoinitiator, photosensitizer, thermopolymerization initiator, modifier or the like, as necessary.

The acrylic oligomer is represented by a product having acryl groups bound to an acrylic resin skeleton, and also include polyester acrylate, urethane acrylate, epoxy acrylate, polyether acrylate or the like. Also products having acryl groups bound to a rigid skeleton of melamine, isocyanuric acid or the like may be used.

The reactive diluent is a component which composes a medium of coating material and serves as a solvent in the coating process, and also serves as a copolymer component of a coated film, by having a group reactive with a monofunctional or multi-functional acrylic oligomer.

Examples of commercially available multi-functional acrylic curable resin include "DIABEAM Series" from Mitsubishi Rayon Co. Ltd., "DENACOL Series" from Nagase & Co. Ltd., "NK Ester Series" from Shin-Nakamura Chemical Co. Ltd., "UNIDIC Series" from DIC Corporation, "Aronix Series" from Toagosei Co. Ltd., "BLEMMER Series" from NOF Corporation, "KAYARAD Series" from Nippon Kayaku Co. Ltd., "Light Ester Series" and "Light Acrylate Series" from Kyoeisha Chemical Co. Ltd.

The hard coat layer in the present invention may be added with various additives as necessary, so long as the effects of the present invention will not adversely be affected. For example, stabilizers such as antioxidant, photostabilizer and UV absorber; surfactant, leveling agent and antistatic agent may be used.

The leveling agent is particularly effective when the hard coat layer is formed by coating for the purpose of reducing surface irregularity. Examples of the leveling agent include silicone-based leveling agent such as dimethylpolysiloxane-polyoxyalkylene copolymer (SH190 from Dow Corning Toray Co. Ltd., for example).

### (UV Absorbing Layer)

The UV absorbing layer in the present invention is configured by dispersing the UV absorber in the resin.

The film mirror of the present invention includes following structures. A structure is such that the triazine-based UV absorber and the UV absorber with an absorption maximum in the UV-A region (320 to 400 nm) are contained in the same UV absorbing layer, content of each UV absorber is 1% by mass or more of the resin, and the total content of the UV absorbers in the resin layer is 15% by mass or less of resin. Another structure is such that the triazine-based UV absorber and the UV absorber with an absorption maximum in the UV-A region (320 to 400 nm) are contained in different resin layers, and the resin layer containing the triazine-based UV absorber is disposed on the incident side of at least one resin layer containing the UV absorber with an absorption maximum in the UV-A region.

The UV absorbing layer containing a diisocyanate-based crosslinking agent may yield an effect of improving strength of the resin layer and adhesiveness between the resin layers. By adding the antioxidant to the resin layer containing the UV absorber, oxidative cleavage of resin chain and decomposition of the UV absorber, caused by peroxy radical generated by photoirradiation, may be suppressed. In addition, when the resin layer containing the UV absorber is brought into contact with the silver layer, addition of the amino group-containing silane coupling agent into the resin layer may largely improve the adhesiveness between the silver layer and the resin layer.

### (Triazine-Based UV Absorber)

The triazine-based UV absorber is represented by the formula (I) below.

General formula (I) Q¹-Q²-OH

In the formula, Q¹ represents a 1,3,5-triazine ring, and Q² represents an aromatic ring.

The compound represented by the formula (I) is more preferably a compound represented by the general formula (I-A) below.

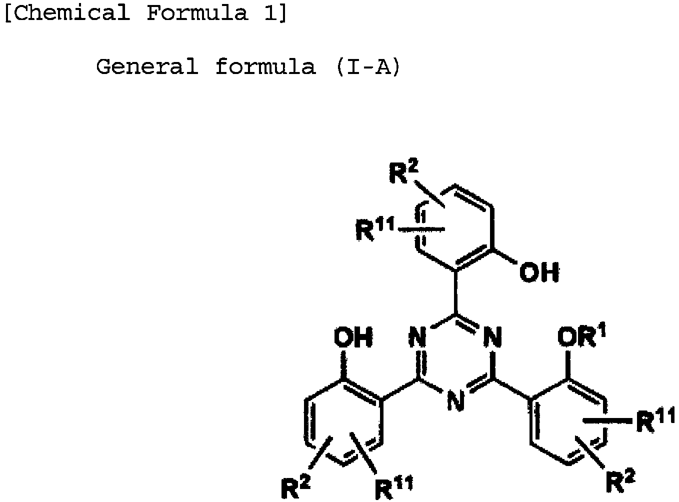

In the formula, R¹ represents a C₁₋₁₈ alkyl group; C₅₋₁₂ cycloalkyl group; C₃₋₁₈ alkenyl group; phenyl group; C₁₋₁₈ alkyl group substituted by a phenyl group, hydroxy group, C₁₋₁₈ alkoxy group, C₅₋₁₂ cycloalkoxy group, C₃₋₁₈ alkenyloxy group, halogen atom, -COOH, -COOR⁴, -O-CO-R⁵, -O-CO-O-R⁶, -CO-NH₂, -CO-NHR⁷, -CO-N(R⁷)(R⁸), -CN, -NH₂, -NHR⁷, -N(R⁷)(R⁸), -NH-CO-R⁵, phenoxy group, phenoxy group substituted by a C₁₋₁₈ alkyl group, phenyl-C₃₋₄ alkoxy group, C₆₋₁₅ bicycloalkoxy group, C₆₋₁₅ bicycloalkylalkoxy group, C₆₋₁₅ bicycloalkenylalkoxy group, or C₆₋₁₅ tricycloalkoxy group; C₅₋₁₂ cycloalkyl group substituted by a hydroxy group, C₁₋₄ alkyl group, C₂₋₆ alkenyl group, or -O-CO-R⁵; glycidyl group; -CO-R⁹; or -SO₂-R¹⁰; or R¹ represents a C₃₋₅₀ alkyl group having one or more oxygen atom interposed therein, and/or, being substituted by a hydroxy group, phenoxy group or C₇₋₁₈ alkylphenoxy group; or R¹ represents -A; -CH₂-CH(XA)-CH₂-O-R¹²; -CR¹³R'¹³-(CH₂)ₘ-X-A; -CH₂-CH(OA)-R¹⁴; -CH₂-CH(OH)-CH₂-XA;

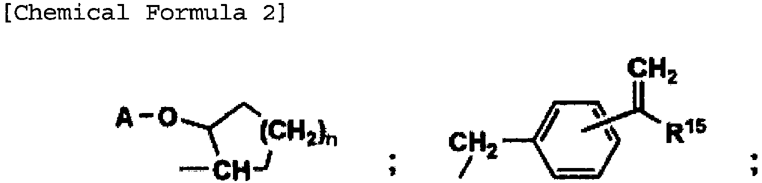

-CR¹⁵R'¹⁵-C(=CH₂)-R"¹⁵; -CR¹³R'¹³-(CH₂)ₘ-CO-X-A; -CR¹³R'¹³-(CH₂)ₘ-CO-O-CR¹⁵R'¹⁵-C(=CH₂)-R"¹⁵; or -CO-O-CR¹⁵R'¹⁵-C (=CH₂)-R"¹⁵ (in the formula, A represents -CO-CR¹⁶=CH-R¹⁷).

Each R² independently represents a C₆₋₁₈ alkyl group; C₂₋₆ alkenyl group; phenyl group; C₇₋₁₁ phenylalkyl group; -COOR⁴; -CN; -NH-CO-R⁵; halogen atom; trifluoromethyl group; or -O-R³.

R³ is same as defined by R¹; R⁴ represents a C₁₋₁₈ alkyl group; C₃₋₁₈ alkenyl group; phenyl group; C₇₋₁₁ phenylalkyl group; C₅₋₁₂ cycloalkyl group; or R⁴ represents a C₃₋₅₀ alkyl group having one or more -O-, -NH-, -NR⁷-, or -S- interposed therein, and may be substituted by OH, phenoxy group or C₇₋₁₈ alkylphenoxy group; R⁵ represents H; C₁₋₁₈ alkyl group; C₂₋₁₈ alkenyl group; C₅₋₁₂ cycloalkyl group; phenyl group; C₇₋₁₁ phenylalkyl group; C₆₋₁₅ bicycloalkyl group; C₆₋₁₅ bicycloalkenyl group; or C₆₋₁₅ tricycloalkyl group; R⁶ represents H; C₁₋₁₈ alkyl group; C₃₋₁₈ alkenyl group; phenyl group; C₇₋₁₁ phenylalkyl group; or C₅₋₁₂ cycloalkyl group; each of R⁷ and R⁸ independently represents a C₁₋₁₂ alkyl group; C₃₋₁₂ alkoxyalkyl group; C₄₋₁₆ dialkylaminoalkyl group; or C₅₋₁₂ cycloalkyl group; or, both of R⁷ and R⁸ totally represent a C₃₋₉ alkylene group; C₃₋₉ oxalkylene group; or C₃₋₉ azaalkylene group; R⁹ represents a C₁₋₁₈ alkyl group; C₂₋₁₈ alkenyl group; phenyl group; C₅₋₁₂ cycloalkyl group; C₇₋₁₁ phenyl alkyl group; C₆₋₁₅ bicycloalkyl group; C₆₋₁₅ bicycloalkylalkyl group; C₆₋₁₅ bicycloalkenyl group; or C₆₋₁₅ tricycloalkyl group; R¹⁰ represents a C₁₋₁₂ alkyl group; phenyl group; naphthyl group; or C₇₋₁₄ alkylphenyl group; each R¹¹ independently represents H; C₁₋₁₈ alkyl group; C₃₋₆ alkenyl group; phenyl group; C₇₋₁₁ phenylalkyl group; halogen atom; or C₁₋₁₈ alkoxy group; R¹² represents a C₁₋₁₈ alkyl group; C₃₋₁₈ alkenyl group; phenyl group; phenyl group substituted by one to three of C₁₋₈ alkyl groups, C₁₋₈ alkoxy groups, C₃₋₈ alkenoxy groups, halogen atoms; or trifluoromethyl groups; or C₇₋₁₁ phenylalkyl group; C₅₋₁₂ cycloalkyl group; C₆₋₁₅ tricycloalkyl group; C₆₋₁₅ bicycloalkyl group; C₆₋₁₅ bicycloalkylalkyl group; C₆₋₁₅ bicycloalkenylalkyl group; or -CO-R⁸; or R¹² represents a C₃₋₅₀ alkyl group which is interposed with one or more -O-, -NH-, -NR⁷- or -S-, and may be substituted by OH, phenoxy group or C₇₋₁₈ alkylphenoxy group; each of R¹³ and R'¹³ independently represents H; C₁₋₁₈ alkyl group; or phenyl group; R¹⁴ represents a C₁₋₁₈ alkyl group; C₃₋₁₂ alkoxyalkyl group; phenyl group; phenyl-C₁₋₄ alkyl group; each of R¹⁵, R'¹⁵ and R"¹⁵ independently represents H or CH₃; R¹⁶ represents H; -CH₂-COO-R⁴; C₁₋₄ alkyl group; or CN; R¹⁷ represents H; -COOR⁴; C₁₋₁₇ alkyl group; or phenyl group; X represents -NH-; -NR⁷-; -O-; -NH-(CH₂)ₚ-NH-; or -O-(CH₂)_{q}-NH-; and index m represents an integer of 0 to 19; n represents an integer of 1 to 8; p represents an integer of 0 to 4; and q represents an integer of 2 to 4; where in the general formula (I-A), at least one of R¹, R² and R¹¹ contains two or more carbon atoms.

Specific examples of the triazine-based UV absorber includes 2,4-diphenyl-6-(2-hydroxy-4-methoxyphenyl)-1,3,5-triazine, 2,4-diphenyl-6-(2-hydroxy-4-ethoxyphenyl)-1,3,5-triazine, 2,4-diphenyl-(2-hydroxy-4-propoxy phenyl)-1,3,5-triazine, 2,4-diphenyl-(2-hydroxy-4-butoxyphenyl)-1,3,5-triazine, 2,4-diphenyl-6-(2-hydroxy-4-butoxyphenyl)-1,3,5-triazine, 2,4-diphenyl-6-(2-hydroxy-4-hexyloxyphenyl)-1,3,5-triazine, 2,4-diphenyl-6-(2-hydroxy-4-octyloxyphenyl)-1,3,5-triazine, 2,4-diphenyl-6-(2-hydroxy-4-dodecyloxyphenyl)-1,3,5-triazine, and 2,4-diphenyl-6-(2-hydroxy-4-benzyloxyphenyl)-1,3,5-triazine.

### (UV Absorber with Maximum Absorption in UV-A Region)

Examples adoptable to the present invention include a benzophenone-based UV absorber and benzotriazole-based UV absorber.

The benzophenone-based UV absorber is represented by the general formula (II) below.

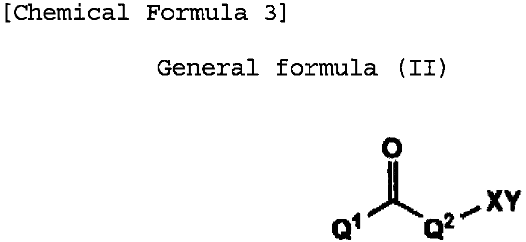

In the formula, each of Q¹ and Q² independently represents an aromatic ring. X represents a substituent, and Y represents an oxygen atom, sulfur atom or nitrogen atom. Each of X and Y may be a hydrogen atom.

Examples of the benzophenone-based UV absorber include 2,4-dihydroxybenzophenone, 2-hydroxy-4-methoxybenzophenone, 2-hydroxy-4-*n*-octoxybenzophenone, 2-hydroxy-4-dodecyloxybenzophenone, 2-hydroxy-4-octadecyloxybenzophenone, 2,2'-dihydroxy-4-methoxybenzophenone, 2,2'-dihydroxy-4,4'-dimethoxybenzophenone, and 2,2',4,4'-tetrahydroxybenzophenone.

The benztriazole-based UV absorber is represented by the general formula (III) below.

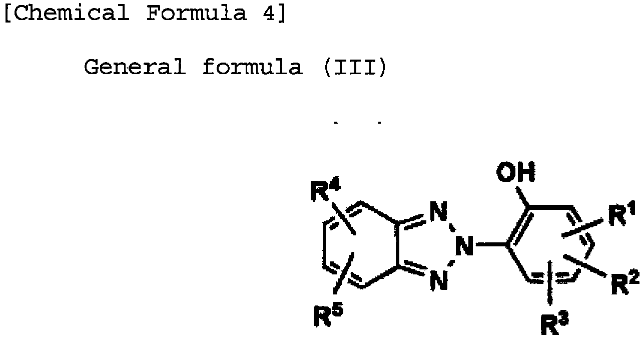

In the formula, each of R¹, R², R³, R⁴ and R⁵ independently represents a monovalent organic group, and at least one of R¹, R² and R³ represents C₁₀₋₂₀ unsubstituted branched or straight-chain alkyl group.

Examples of the benztriazole-based UV absorber include 2-(2'-hydroxy-5-methylphenyl)benztriazole, 2-(2'-hydroxy-3',5'-di-*t*-butylphenyl)benztriazole, 2-(2'-hydroxy-3'-*t*-butyl-5'-methylphenyl)benztriazole, 2-(2'-hydroxy-5'-methylphenyl)benztriazole, 2-(2'-hydroxy-3',5'-di-*tert*-butylphenyl)benztriazole, 2-(2'-hydroxy-3'-*tert*-butyl-5'-methylphenyl)benztriazole, 2-(2'-hydroxy-3',5'-di-*tert*-butylphenyl)-5-chlorobenztriazole, 2-(2'-hydroxy-3'-(3",4",5",6"-tetrahydrophthalimidomethyl)-5'-methylphenyl)benztriazole, 2,2-methylenebis(4-(1,1,3,3-tetramethylbutyl)-6-(2H-benztriazole -2-yl)phenol), 2-(2'-hydroxy-3'-*tert*-butyl-5'-methylphenyl)-5-chlorobenztriazol e, 2-(2'-hydroxy-3',5'-di-*tert*-butylphenyl)-5-chlorobenztriazole, 2-(2'-hydroxy-3',5'-di-*tert*-amylphenyl)-5-chlorobenztriazole, 2-(2'-hydroxy-3',5'-di-*tert*-butylphenyl)-5-chlorobenztriazole, and 2- (2'-hydroxy-3',5'-di-*tert*-amylphenyl)-5-chlorobenztriazole.

### (Diisocyanate-Based Crosslinking Agent)

The iisocyanate-based crosslinking agent adoptable to the present invention is not specifically limited, and those having been used conventionally, such as TDI (tolylene diisocyanate) -based, XDI (xylene diisocyanate)-based, MDI (methylene diisocyanate)-based, HMDI (hexamethylene diisocyanate)-based ones are adoptable. From the viewpoint of weatherability, it is preferable to use the aliphatic diisocyanate, such as MDI-based or HMDI-based isocyanate. The aliphatic diisocyanate generally has weatherability more excellent than that of the aromatic diisocyanate-based crosslinking agent. For an exemplary case where the aromatic diisocyanate-based crosslinking agent is used, the reflectivity may unfortunately decrease, the resin layer under photoirradiation may be yellowed or may cause color change into reddish purple at the interface with the silver layer, and may thereby cause decrease in the reflectivity.

### (Amino Group-Containing Silane Coupling Agent)

Examples of the agent adoptable to the present invention include amino group-containing silane compounds such as γ-aminopropyltrimethoxysilane, γ-aminopropyltriethoxysilane, γ-aminopropyltriisopropoxysilane, γ-aminopropylmethyldimethoxysilane, γ-aminopropylmethyldiethoxysilane, N-(2-aminoethyl)aminopropyltrimethoxysilane, N-(2-aminoethyl)aminopropylmethyldimethoxysilane, N-(2-aminoethyl)aminopropyltriethoxysilane, N-(2-aminoethyl)aminopropylmethyldiethoxysilane, N-(2-aminoethyl)aminopropyltriisopropoxysilane, N-(2-(2-aminoethyl)aminoethyl)aminopropyltrimethoxysilane, N-(6-aminohexyl)aminopropyltrimethoxysilane, 3-(N-ethylamino)-2-methylpropyltrimethoxysilane, 2-aminoethylaminomethyltrimethoxysilane, N-cyclohexylaminomethyltriethoxysilane, N-cyclohexylaminomethyldiethoxymethylsilane, N-phenyl-γ-aminopropyltrimethoxysilane, N-phenylaminomethyltrimethoxysilane, N-benzyl-γ-aminopropyltrimethoxysilane, N-vinylbenzyl-γ-aminopropyltriethoxysilane, N-(3-triethoxysilylpropyl)-4,5-dihydroimidazole, N-cyclohexylaminomethyltriethoxysilane, N-cyclohexylaminomethyldiethoxymethylsilane, N-phenylaminomethyltrimethoxysilane, (2-aminoethyl)aminomethyltrimethoxysilane, and N,N'-bis[3-(trimethoxysilyl)propyl]ethylenediamine.

### (Antioxidant)

The antioxidant adoptable to the present invention is selectable from the group consisting of hindered phenolic compound, hindered amine-based compound, and phosphorus-containing compound.

Specific examples of the hindered phenolic compound include *n*-octadecyl-3-(3,5-di-*t*-butyl-4-hydroxyphenyl) propionate, *n*-octadecyl-3-(3,5-di-*t*-butyl-4-hydroxyphenyl) acetate, *n*-octadecyl-3,5-di-*t*-butyl-4-hydroxy benzoate, *n*-hexyl-3,5-di-*t*-butyl-4-hydroxyphenyl benzoate, *n*-dodecyl-3,5-di-*t*-butyl-4-hydroxyphenyl benzoate, neododecyl-3-(3,5-di-*t*-butyl-4-hydroxyphenyl) propionate, dodecyl-β-(3,5-di-*t*-butyl-4-hydroxyphenyl) propionate, ethyl-α-(4-hydroxy-3,5-di-*t*-butylphenyl) isobutyrate, octadecyl-α-(4-hydroxy-3,5-di-*t*-butylphenyl) isobutyrate, octadecyl-α-(4-hydroxy-3,5-di-*t*-butyl-4-hydroxyphenyl) propionate, 2-(*n*-octylthio)ethyl-3,5-di-*t*-butyl-4-hydroxy benzoate, 2-(*n*-octylthio)ethyl-3,5-di-*t*-butyl-4-hydroxy-phenyl acetate, 2-(*n*-octadecylthio)ethyl-3,5-di-*t*-butyl-4-hydroxyphenyl acetate, 2-(*n*-octadecylthio)ethyl-3,5-di-*t*-butyl-4-hydroxy benzoate, 2-(2-hydroxyethylthio)ethyl-3,5-di-*t*-butyl-4-hydroxy benzoate, diethylglycolbis(3,5-di-*t*-butyl-4-hydroxy-phenyl) propionate, 2-(*n*-octadecylthio)ethyl-3-(3,5-di-*t*-butyl-4-hydroxyphenyl) propionate, stearylamide N,N-bis[ethylene-3-(3,5-di-*t*-butyl-4-hydroxyphenyl) propionate], *n*-butylimino-N,N-bis[ethylene-3-(3,5-di-*t*-butyl-4-hydroxyphenyl) propionate], 2-(2-stearoyloxyethylthio)ethyl-3,5-di-*t*-butyl-4-hydroxy benzoate, 2-(2-stearoyloxyethylthio)ethyl-7-(3-methyl-5-*t*-butyl-4-hydroxyphenyl) heptanoate, 1,2-propylene glycol bis[3-(3,5-di-*t*-butyl-4-hydroxy phenyl) propionate], ethylene glycol bis[3-(3,5-di-*t*-butyl-4-hydroxyphenyl) propionate], neopentyl glycol bis[3-(3,5-di-*t*-butyl-4-hydroxyphenyl) propionate], ethylene glycol bis(3,5-di-*t*-butyl-4-hydroxyphenyl acetate), glycerin-1-*n*-octadecanoate-2,3-bis(3,5-di-*t*-butyl-4-hydroxypheny 1 acetate), pentaerythritol tetrakis[3-(3',5'-di-*t*-butyl-4'-hydroxyphenyl) propionate], 3,9-bis{2-[3-(3-*tert*-butyl-4-hydroxy-5-methylphenyl) propionyloxy]-1,1-dimethylethyl}-2,4,8,10-tetraoxaspiro[5.5] undecane, 1,1,1-trimethylolethane-tris[3-(3,5-di-*t*-butyl-4-hydroxyphenyl) propionate], sorbitol hexa[3-(3,5-di-*t*-butyl-4-hydroxyphenyl) propionate], 2-hydroxyethyl-7-(3-methyl-5-t-butyl-4-hydroxyphenyl) propionate, 2-stearoyloxyethyl-7-(3-methyl-5-*t*-butyl-4-hydroxyphenyl) heptanoate, 1,6-*n*-hexanediolbis[(3',5'-di-*t*-butyl-4-hydroxyphenyl) propionate], and pentaerythritol tetrakis(3,5-di-*t*-butyl-4-hydroxyhydrocinnamate). The phenol compounds of the above describe type are commercially available, for example, under the trade names of "IRGANOX 1076" and "IRGANOX 1010" from Ciba Japan K.K..

Specific examples of the hindered amine-based compound include bis(2,2,6,6-tetramethyl-4-piperidyl) sebacate, bis(2,2,6,6-tetramethyl-4-piperidyl) succinate, bis(1,2,2,6,6-pentamethyl-4-piperidyl) sebacate, bis(N-octoxy-2,2,6,6-tetra methyl-4-piperidyl) sebacate, bis(N-benzyloxy-2,2,6,6-tetramethyl-4-piperidyl) sebacate, bis(N-cyclohexyloxy-2,2,6,6-tetramethyl-4-piperidyl) sebacate, bis(1,2,2,6,6-pentamethyl-4-piperidyl)-2-(3,5-di-*t-*butyl-4-hydroxybenzyl)-2-butyl malonate, bis(1-acroyl-2,2,6,6-tetramethyl-4-piperidyl)-2,2-bis(3,5-di-*t-*butyl-4-hydroxybenzyl)-2-butyl malonate, bis(1,2,2,6,6-pentamethyl-4-piperidyl) decanedioate, 2,2,6,6-tetramethyl-4-piperidyl methacrylate, 4-[3-(3,5-di-*t*-butyl-4-hydroxyphenyl)propionyloxyl-1-[2-{3-(3,5-di-*t*-butyl-4-hydroxyphenyl)propionyloxy}ethyl]-2,2,6,6-tetrameth ylpiperidine, 2-methyl-2-(2,2,6,6-tetramethyl-4-piperidyl)amino-N-(2,2,6,6-tetramethyl-4-piperidyl)propionamide, tetrakis (2,2,6,6-tetramethyl-4-piperidyl)-1,2,3,4-butane tetracarboxylate, and tetrakis(1,2,2,6,6-pentamethyl-4-piperidyl)-1,2,3,4-butane tetracarboxylate.

The antioxidant may be a polymer compound, examples of which include N,N',N",N"'-tetrakis[4,6-bis{butyl-(N-methyl-2,2,6,6-tetramethylpiperidine-4-yl)amino}-triazine-2-yl]-4,7-diazadecane -1,10-diamine;
a polycondensation product of dibutylamine, and 1,3,5-triazine-N,N'-bis(2,2,6,6-tetramethyl-4-piperidyl)-1,6- hexamethylene diamine and N-(2,2,6,6-tetramethyl-4-piperidyl)butylamine;
a polycondensation product of dibutylamine, and 1,3,5-triazine and N,N'-bis(2,2,6,6-tetramethyl-4-piperidyl)butylamine;
a polycondensation product of poly[{(1,1,3,3-tetramethylbutyl) amino-1,3,5-triazine-2,4-diyl}{(2,2,6,6-tetramethyl-4-piperidyl) imino}hexamethylene {(2,2,6,6-tetramethyl-4-piperidyl)imino}], and 1,6-hexanediamine- N,N'-bis(2,2,6,6-tetramethyl-4-piperidyl) and morpholine-2,4,6-trichloro-1,3,5-triazine;
a large-molecular-weight HALS composed of a plurality of piperidine rings combined while being interposed by a triazine skeleton, such as poly[(6-morpholino-*s*-triazine-2,4-diyl) [(2,2,6,6,-tetramethyl-4-piperidyl)imino]-hexamethylene {(2,2,6,6-tetramethyl-4-piperidyl)imino}];
a polymerized product of dimethyl succinate and 4-hydroxy-2,2,6,6-tetramethyl-1-piperidine ethanol; and
a compound having a plurality of piperidine rings combined while being interposed by an ester bond, such as mixed esterification product of 1,2,3,4-butane tetracarboxylic acid and 1,2,2,6,6-pentamethyl-4-piperidinol and 3,9-bis(2-hydroxy-1,1-dimethylethyl)-2,4,8,10-tetraoxaspiro[5.5]undecane, but not limited thereto.

Among them, preferable are the polycondensation product of dibutylamine and 1,3,5-triazine and
N,N'-bis(2,2,6,6-tetramethyl-4-piperidyl)butylamine; poly[{(1,1,3,3-tetramethylbutyl)amino-1,3,5-triazine-2,4-diyl}{ (2,2,6,6-tetramethyl-4-piperidyl)imino}hexamethylene {(2,2,6,6-tetramethyl-4-piperidyl)imino}]; and polycondensation product of dimethyl succinate and
4-hydroxy-2,2,6,6-tetramethyl-1-piperidine ethanol, with a number average molecular weight (Mn) of 2,000 to 5,000.

The hindered amine compound of the above described type are commercially available, for example, under the trade names of "TINUVIN 144" and "TINUVIN 770" from Ciba Japan K.K., and under the trade name of "ADK STAB LA-52" from ADEKA Corporation.

Specific examples of the phosphorus-containing compound include monophosphite-based compound such as triphenyl phosphite, diphenylisodecyl phosphite, phenyldiisodecyl phosphite, tris(nonylphenyl) phosphite, tris(dinonylphenyl) phosphite, tris(2,4-di-*t*-butylphenyl) phosphite,
10-(3,5-di-*t*-butyl-4-hydroxybenzyl)-9,10-dihydro-9-oxa-10-phosphaphenanthrene-10-oxide,
6-[3-(3-*t*-butyl-4-hydroxy-5-methylphenyl)propoxy]-2,4,8,10-tetra -t-butyldibenz[d,f][1,3,2]dioxaphosphepine, and tridecylphosphite;
diphosphite-based compound such as 4,4'-butylidene-bis(3-methyl-6-t-butylphenyl-di- tridecylphosphite), and 4,4'-isopropyilidene-bis (phenyl-di-alkyl (C₁₂ to C₁₅) phosphite) ;
phosphonite-based compound such as triphenyl phosphonite, tetrakis(2,4-di-*tert*-butylphenyl)[1,1-biphenyl]-4,4'-diylbis phosphonite, and tetrakis(2,4-di-*tert*-butyl-5-methylphenyl)[1,1-biphenyl]-4,4'-diyl bisphosphonite;
phosphinite-based compound such as triphenylphosphinite, and 2,6-dimethylphenyldiphenylphosphinite; and
phosphine-based compound such as triphenylphosphine, and tris(2,6-dimethoxyphenyl)phosphine.

The phosphorus-containing compound of the above-described types are available, for example, under the trade names of "Sumilizer GP" from Sumitomo Chemical Co. Ltd., under the trade names of "ADK STAB PEP-24G", "ADK STAB PEP-36" and "ADK STAB 3010" from ADEKA Corporation, under the trade name of "IRGAFOS P-EPQ" from Ciba Japan K.K., and under the trade name of "GSY-P101" from Sakai Chemical Industry Co. Ltd.

### (Binder Resin of UV Absorbing Layer)

Possible forms of the UV absorbing layer in the present invention include films having a UV absorber dispersed in various publicly-known resins. Examples of the resin film which serves as a base include cellulose ester-based film, polyester-based film, polycarbonate-based film, polyacrylate-based film, polysulfone (including also polyethersulfone)-based film, polyester films such as polyethylene terephthalate and polyethylene naphthalate, polyethylene film, polypropylene film, cellophane, cellulose diacetate film, cellulose triacetate film, cellulose acetate propionate film, cellulose acetate butyrate film, polyvinylidene chloride film, polyvinyl alcohol film, ethylenevinyl alcohol film, syndiotactic polystyrene-based film, polycarbonate film, norbornene-based resin film, polymethylpentene film, polyether ketone film, polyether ketone imide film, polyamide film, fluorine-containing resin film, nylon film, polymethyl methacrylate film, and acrylic film. Among them, preferable examples include polycarbonate-based film, polyester-based film, norbornene-based resin film, cellulose ester-based film, and acrylic film, and particularly preferable examples include acrylic film. Also a film manufactured by molten casting, or a film manufactured by solution casting are adoptable.

### (Anti-Corrosion Layer)

The film mirror for solar heat generation of the present invention may have an anti-corrosion layer provided thereto. The anti-corrosion layer in the present invention is provided for the purpose of corrosion prevention of the silver reflective layer.

The anti-corrosion layer in the present invention may be configured by a layer composed solely of anticorrosive, or by a layer composed of a resin containing anticorrosive, where a resin layer containing anticorrosive is preferable. It is more preferable to use a resin layer containing 0.01 to 10% by mass of anticorrosive.

The resin used for the anti-corrosion layer is preferably a resin capable of functioning also as an adhesive layer, and is not specifically limited so long as it can enhance adhesiveness between the silver reflective layer and the resin base layer (resin film). The resin used for the anti-corrosion layer is, therefore, required to have adhesiveness enough to tightly bond the resin base (resin film) and the silver reflective layer, heat resistance enough to endure heat during formation of the silver reflective layer typically by vacuum vapor deposition, and smoothness enough to ensure a high reflective performance intrinsic to the silver reflective layer.

The resin used for the anti-corrosion layer in the present invention is not specifically limited so long as it satisfies the above-described requirements for adhesiveness, heat resistance and smoothness. Examples of the adoptable resin include polyester-based resin, acrylic resin, melamine-based resin, epoxy-based resin, polyamide-based resin, vinyl chloride-based resin, and vinyl chloride vinyl acetate copolymer-based resin, where they may be used alone or in combination. From the viewpoint of weatherability, a mixed resin of polyester-based resin and melamine-based resin is preferable, and a thermosetting resin obtained by further mixing thereto a curing agent such as isocyanate is more preferable.

Thickness of the anticorrosive layer in present invention is preferably 0.01 to 3 µm from the viewpoints of adhesiveness, smoothness and reflectivity of the reflecting member, and more preferably 0.1 to 1 µm.

Method of forming the anticorrosive layer may be any of publicly known coating methods including gravure coating, reverse coating and die coating.

### (Anticorrosive)

The anticorrosive preferably used for the anti-corrosion layer in the present invention is roughly classified into an anticorrosive having a group adsorptive to silver and an antioxidant.

Now, "corrosion" herein means an event such that a metal (silver) is chemically or electrochemically eroded or degraded in material quality by environmental substances surrounding the metal (see JIS Z0103-2004).

While optimum content of the anticorrosive may vary depending on the compound to be used, it is generally preferable to adjust the content to the range from 0.1 to 1.0 g/m².

### (Anticorrosive Having Group Adsorptive to Silver)

The anticorrosive having a group adsorptive to silver is preferably at least one types or mixture of two or more types selected, for example, from amines and the derivatives thereof, compound having pyrrole ring, compound having triazole ring, compound having pyrazole ring, compound having thiazole ring, compound having imidazole ring, compound having indazole ring, copper chelate compounds, thioureas, compound having mercapto group, and naphthalene-based compound.

The amines and the derivatives thereof include ethylamine, laurylamine, tri-*n*-butylamine, O-toluidine, diphenylamine, ethylenediamine, diethylenetriamine, triethylenetetramine, tetraethylenepentamine, monoethanolamine, diethanolamine, triethanolamine, 2N-dimethylethanolamine, 2-amino-2-methyl-1,3-propanediol, acetamide, acylamide, benzamide, *p*-ethoxychrysoidine, dicyclohexylammonium nitrite, dicyclohexylammonium salicylate, monoethanolamine benzoate, dicyclohexylammonium benzoate, diisopropylammonium benzoate, diisopropylammonium nitrite, cyclohexylamine carbamate, nitronaphthaleneammonium nitrite, cyclohexylamine benzoate, dicyclohexylammonium cyclohexanecarboxylate, cyclohexyl aminecyclohexanecarboxylate, dicyclohexylammonium acrylate, and cyclohexylamine acrylate, or mixture of these compounds.

Examples of the compound having a pyrrole ring include N-butyl-2,5-dimethylpyrrole, N-phenyl-2,5-dimethylpyrrole, N-phenyl-3-formyl-2,5-dimethylpyrrole, N-phenyl-3,4-diformyl-2,5-dimethylpyrrole, and mixtures of these compounds.

Examples of the compound having a triazole ring include 1,2,3-triazole, 1,2,4-triazole, 3-mercapto-1,2,4-triazole, 3-hydroxy-1,2,4-triazole, 3-methyl-1,2,4-triazole, 1-methyl-1,2,4-triazole, 1-methyl-3-mercapto-1,2,4-triazole, 4-methyl-1,2,3-triazole, benzotriazole, tolyltriazole, 1-hydroxybenzotriazole, 4,5,6,7-tetrahydrotriazole, 3-amino-1,2,4-triazole, 3-amino-5-methyl-1,2,4-triazole, carboxybenzotriazole, 2-(2'-hydroxy-5'-methylphenyl)benzotriazole, 2-(2'-hydroxy-5'-*tert*-butylphenyl)benzotriazole, 2-(2'-hydroxy-3',5'-di-*tert*-butylphenyl)benzotriazole, 2-(2'-hydroxy-4-octoxyphenyl)benzotriazole, and mixtures of them.

Examples of the compound having a pyrazole ring include pyrazole, pyrazoline, pyrazolone, pyrazolidine, pyrazolidone, 3,5-dimethylpyrazole, 3-methyl-5-hydroxypyrazole, 4-aminopyrazole, and mixtures of them.

Examples of the compound having a thiazole ring include thiazole, thiazoline, thiazolone, thiazolidine, thiazolidone, isothiazole, benzothiazole, 2-N,N-diethylthiobenzothiazole, *p*-dimethylaminobenzalrhodanine, 2-mercaptobenzothiazole, and mixtures of them.

Examples of the compound having an imidazole ring include imidazole, histizine, 2-heptadecylimidazole, 2-methylimidazole, 2-ethyl-4-methylimidazole, 2-phenylimidazole, 2-undecylimidazole, 1-benzyl-2-methylimidazole, 2-phenyl-4-methylimidazole, 1-cyanoethyl-2-methylimidazole, 1-cyanoethyl-2-phenylimidazole, 1-cyanoethyl-2-ethyl-4-methylimidazole, 1-cyanoethyl-2-undecylimidazole, 2-phenyl-4-methyl-5-hydromethylimidazole, 2-phenyl-4,5dihydroxymethylimidazole, 4-formylimidazole, 2-methyl-4-formylimidazole, 2-phenyl-4-formylimidazole, 4-methyl-5-formylimidazole, 2-ethyl-4-methyl-5-formylimidazole, 2-phenyl-4-methyl-4-formylimidazole, 2-mercaptobenzoimidazole, and mixtures of them.

Examples of the compound having an indazole ring include 4-chloroindazole, 4-nitroindazole, 5-nitroindazole, 4-chloro-5-nitroindazole, and mixtures of them.

Examples of the copper chelate compounds include acetylacetone copper, ethylenediamine copper, phthalocyanine copper, ethylenediamine tetraacetate copper, hydroxyquinoline copper, and mixtures of them.

Examples of the thioureas include thiourea, guanylthiourea, and mixtures of them.

Examples of the compounds having a mercapto group, inclusive of the above-described materials, include mercaptoacetic acid, thiophenol, 1,2-ethanediol, 3-mercapto-1,2,4-triazole, 1-methyl-3-mercapto-1,2,4-triazole, 2-mercaptobenzothiazole, 2-mercaptobenzoimidazole, glycoldimercapto acetate, 3-mercaptopropyltrimethoxysilane, and mixtures of them.

Examples of the naphthalene-based compound include thionalide.

### (Silver Reflective Layer)

Either of wet process and dry process is adoptable as a method of forming the silver reflective layer in the present invention.

The wet process is a general term for plating, which is a method of forming a silver film by allowing silver to deposit from a solution, specifically exemplified by silver mirror reaction.

On the other hand, the dry process is a general term for vacuum deposition, specific examples of which include resistance heated vacuum deposition, electron beam heated vacuum deposition, ion plating, ion beam-assisted vacuum deposition, and sputtering. Among them, vacuum deposition, to which the roll-to-roll continuous film making is adoptable, is preferably used. In short, one embodiment of the method of manufacturing the film mirror for solar heat generation of the present invention involves formation of the silver reflective layer in the present invention by silver deposition.

Thickness of the silver reflective layer in the present invention is preferably 10 to 200 nm from the viewpoint of reflectivity and so forth, and more preferably 30 to 150 nm.

In the present invention, the silver reflective layer may be disposed on either of the incident side of the support and the opposite side. Taking that the support is composed of resin into account, and for the purpose of avoiding degradation of the resin, the silver reflective layer is more preferably disposed on the incident side of the support.

### (Resin Base)

The resin base used in the present invention may be configured by various publicly-known resin films which are exemplified by cellulose ester-based film, polyester-based film, polycarbonate-based film, polyarylate-based film, polysulfone (also including polyethersulfone)-based film, polyester films such as polyethylene terephthalate and polyethylene naphthalate, polyethylene film, polypropylene film, cellophane, cellulose diacetate film, cellulose triacetate film, cellulose acetate propionate film, cellulose acetate butyrate film, polyvinylidene chloride film, polyvinyl alcohol film, ethylenevinyl alcohol film, syndiotactic polystyrene-based film, polycarbonate film, norbornene-based resin film, polymethylpentene film, polyether ketone film, polyether ketone imide film, polyamide film, fluorine-containing resin film, nylon film, polymethyl methacrylate film, and acrylic film.

Among them, preferable examples include polycarbonate-based film, polyester-based film, norbornene-based resin film, and cellulose ester-based film. It is particularly preferable to use polyester-based film or cellulose ester-based film, which may be manufactured by either of melt casting or solution casting.

Thickness of the resin base is preferably adjusted to an appropriate value depending on types of resin and purposes. It generally falls in the range from 10 to 300 µm, preferably from 20 to 200 µm, and more preferably 30 to 100 µm.

### (Adhesive Layer)

The reflector for solar heat generation of the present invention is configured by bonding the film mirror for solar heat generation onto another base, in particular onto a metal support, while placing an adhesive layer between them.

Configuration of the adhesive layer used in the present invention is not specifically limited, and any of dry laminating material, dry laminating material, adhesive, heat seal material, and hot melt material may be used. The adhesive adoptable herein may be polyester-based resin, urethane-based resin, polyvinyl acetate-based resin, acrylic resin, or nitrile rubber.

Method of laminating is not specifically limited. From the viewpoints of economy and productivity, it is preferably implemented according to a continuous roll-to-roll scheme.

It is generally preferable that thickness of the adhesive layer falls in the range from 1 to 50 µm or around from the viewpoint of effect of tackiness and rate of drying.

Another base to be bonded with the film mirror for solar heat generation of the present invention may be any of those capable of protecting the silver reflective layer, and examples of which include plastic film or sheet such as acrylic film or sheet, polycarbonate film or sheet, polyarylate film or sheet, polyethylene naphthalate film or sheet, polyethylene terephthalate film or sheet, and fluorine-containing film; resin film or sheet having powder of titanium oxide, silica, aluminum, copper or the like kneaded therein; and resin film or sheet formed by coating a resin containing any of these powders kneaded therein, and further treated on the surface thereof typically by vacuum deposition of metal.

While thickness of the bonded film or sheet is not specifically limited, in general, it preferably falls in the range from 12 to 250 µm.

These another bases may have formed thereon recesses or projections, before bonded with the film mirror for solar heat generation of the present invention, or after the bonding, or at the same time with the bonding.

### (Thickness of Film Mirror for Solar Thermal Generation)

Total thickness of the film mirror for solar heat generation of the present invention is preferably 75 to 250 µm from the viewpoints of prevention of distortion of mirror, regular reflectance, and handlability, more preferably 90 to 230 µm, and particularly 100 to 220 µm.

### (Reflector for Solar Thermal Generation)

The film mirror for solar heat generation of the present invention may be used preferably for the purpose of condensing sunlight. While the film mirror for solar heat generation may be used alone as a sunlight condensing mirror, it is more preferable to use it in the form of reflector for solar heat generation of the present invention, by bonding the film mirror for solar heat generation of the present invention to another support, particularly to a metal support, by placing in between an adhesive layer applied on the surface of the resin base opposite to the surface having formed the silver reflective layer.

One possible embodiment of use of the reflector for solar heat generation is such as forming the reflector into a gutter shape (semicylindrical shape), providing at the center of the semicylinder a cylindrical component having a fluid enclosed therein, heating the inner fluid by condensing sunlight onto the cylindrical component, and converting the resultant thermal energy into electricity. Another possible embodiment is such as disposing flat-type reflectors at a plurality of positions, and condensing sunlight reflected on the individual reflectors onto a single reflective mirror (center reflective mirror), and converting the resultant thermal energy obtained by reflection on the reflective mirror into electricity by a generator unit. Since a high level of regular reflectance of the reflector is required particularly in the latter embodiment, the film mirror for solar heat generation of the present invention may be used in a particularly preferable manner.

### (Metal Support)

Examples of the metal support adoptable to the reflector for solar heat generation of the present invention include metal materials with large thermal conductivity, such as steel sheet, copper sheet, aluminum sheet, aluminum-plated steel sheet, aluminum alloy-plated steel sheet, copper-plated steel sheet, tin-plated steel sheet, chromium-plated steel sheet, and stainless steel sheet.

In the present invention, it is particularly preferable to use any of the plated steel sheet, stainless steel sheet and aluminum sheet, all of which excellent in corrosion resistance.

### EXAMPLE

The present invention will now be explained into detail referring to Examples, but without limiting the present invention. In the description of Examples, notations of "part" and "%" mean "part by mass" and "% by mass", respectively, unless otherwise specifically noted.

### Example: Manufacturing of Reflector for Solar Thermal Generation

### (Manufacturing of Reflector for Solar Thermal Generation 1)

A bi-oriented polyester film (polyethylene terephthalate film, 100 µm thick) was used as the resin base. A silver reflective layer of 80 nm thick was formed on one surface of the polyethylene terephthalate film by vacuum deposition. On the silver reflective layer, an anti-corrosion layer of 0.1 µm thick was formed by gravure coating. A coating liquid was composed of a 10:2 mixture (ratio by mass, based on the solid contents of resins) of polyester-based resin and toluene diisocyanate-based resin, added with 3% by mass, relative to the solid contents of resins, of glycol dimercapto acetate as an anticorrosive.

Next, a coating liquid was coated thereon by gravure coating to thereby form a UV absorbing layer of 3 µm thick. The coating liquid was prepared by dissolving an acrylic resin containing Tinuvin 234 (from Ciba Japan K.K.) by 1% by mass to the acrylic resin and Tinuvin 1577 (from Ciba Japan K.K.) by 1% by mass to the acrylic resin in methylene chloride as a solvent and dispersed, while adjusting the ratio of solvent and solid content becomes 10:2. Next, on the thus-formed UV absorbing layer, Opstar (from JSR Corporation), which is a UV-curable hard coating liquid, was coated using an applicator, and irradiated by UV light of 350 nm for 30 seconds, to thereby form a hard coat layer of 5 µm thick.

Next, on the surface of the base composed of a polyethylene terephthalate film, opposite to the surface having the hard coat layer formed thereon, an acrylic resin adhesive (from Showa Highpolymer Co. Ltd.) was coated to form an adhesive layer of 10 µm thick, to thereby manufacture the film mirror 1 for solar heat generation.

Next, onto an aluminum plate of 0.1 mm thick, and 4 cm (length) × 5 cm (width) in size (from Sumitomo Light Metal Industries, Ltd.), the film mirror 1 for solar heat generation manufactured in the above was bonded, while placing the adhesive layer in between, to thereby manufacture a reflector for solar heat generation 1 containing the UV absorber with an absorption maximum in the UV-A region and the triazine-based UV absorber in the same UV absorbing layer.

### (Manufacturing of Reflectors for Solar Thermal Generation 2 to 10, 15 to 18)

In the manufacturing of the reflector for solar heat generation 1, the types and amount of the UV absorber were varied as listed in Table 2, and in some of the samples, the UV absorbing layer was added with hexamethylene diisocyanate as an aliphatic diisocyanate-based crosslinking agent, and with an hindered amine-based compound Tinuvin 152 as an antioxidant, to thereby manufacture reflectors for solar heat generation 2 to 10, and 15 to 18, containing the UV absorber with an absorption maximum in the UV-A region and the triazine-based UV absorber in the same UV absorbing layer.

### (Manufacturing of Reflectors For Solar Thermal Generation 11 to 14)

In the manufacturing of the reflector for solar heat generation 1, the UV absorbing layer was stacked on the silver reflective layer, without providing the anti-corrosion layer in between. The UV absorbing layer was added with the UV absorber, hexamethylene diisocyanate as an aliphatic diisocyanate-based crosslinking agent, a hindered amine-based compound Tinuvin 152 as the antioxidant, and aminopropyltriethoxysilane as the amino group-containing silane coupling agent as listed in Table 2, to thereby manufacture reflectors for solar heat generation 11 to 14, containing the UV absorber with an absorption maximum in the UV-A region and the triazine-based UV absorber in the same UV absorbing layer, and the UV absorbing layer was brought into contact with the silver layer.

### (Manufacturing of Reflectors for Solar Thermal Generation 19 to 26, and 32 to 34)

In the manufacturing of the reflector for solar heat generation 1, the UV absorbing layer 1 and the UV absorbing layer 2 were provided on the anti-corrosion layer. In some of the samples, the UV absorbing layer was added with hexamethylene diisocyanate as an aliphatic diisocyanate-based crosslinking agent, and a hindered amine-based compound Tinuvin 152 as an antioxidant, as listed in Table 3, to thereby manufacture reflectors for solar heat generation 19 to 26 and 32 to 34, containing the UV absorber with an absorption maximum in the UV-A region and the triazine-based UV absorber in different UV absorbing layers, respectively.

### (Manufacturing of Reflectors for Solar Thermal Generation 27 to 31, and 35)

In the manufacturing of the reflectors for solar heat generation 19 to 26, two or three UV absorbing layers were stacked on the silver reflective layer, without providing the anti-corrosion layer. The UV absorbing layer was added with UV absorber, hexamethylene diisocyanate as an aliphatic diisocyanate-based crosslinking agent, a hindered amine-based compound Tinuvin 152 as an antioxidant, and aminopropyltriethoxysilane as an amino group-containing silane coupling agent, as listed in Table 3. In solar heat generator 31, the UV absorbing layer 3 of 40 µm thick was stacked. By the procedures described in the above, reflectors for solar heat generation 27 to 31 and 35, containing the UV absorber with an absorption maximum in the UV-A region and the triazine-based UV absorber in different UV absorbing layers, and having the UV absorbing layer brought into contact with the silver layer, were manufactured.

The UV absorbers used in Examples are shown in Table 1.

**[Table 1]**

| UV absorber | Broad category | Structural category | Absorption maximum wavelength (nm) |
|---|---|---|---|
| CHIMASSORB 81 | UV absorber with absorption maximum in UV-A region | Benzophenone-based | 340 |
| Tinuvin 234 | UV absorber with absorption maximum in UV-A region | Benzotriazole-based | 345 |
| Tinuvin 1577 | Triazine-based UV absorber | Triazine based | 270 |

### (Evaluation of Reflector for Solar Thermal Generation)

The thus-manufactured reflectors for solar heat generation were evaluated in terms of lightfastness, wet heat resistance, sulfidation resistance and adhesiveness of layers, according to the methods described below.

### (Lightfastness: Stability of Regular Reflectance)

A spectrophotometer UV265 from Shimadzu Corporation was modified by attaching an auxiliary reflectometer of integrating sphere type. The angle of incidence of incident light was adjusted to 5° with respect to the normal line of the reflective surface and the regular reflectance of each sample was measured at a reflection angle of 5°. Evaluation was made based on an average reflectivity over a range from 350 nm 700 nm.

Next, each sample was irradiated by UV using EYE Super UV tester from Iwasaki Electric Co. Ltd., under an environment of 65°C for 7 days. The regular reflectance was measured according to the method described in the above, an average value of the regular reflectance assuming the value before UV irradiation as 100% was calculated, and based on which the lightfastness was evaluated:
⊚: average value of regular reflectance is 85% or larger;
○: average value of regular reflectance is 80% or larger, and smaller than 85%:
Δ: average value of regular reflectance is 70% or larger, and smaller than 80%; and
x: average value of regular reflectance is smaller than 70%.

### (Wet Heat Resistance: Bleed-out Resistance)

Each sample was allowed to stand in a thermo-humidistat chamber LH43 (from Nagano Science Co. Ltd.) under an environment of 80°C, 90%Rh for 7 days, then visually observed under a fluorescent lamp and a green lamp (from Funatech Co. Ltd.), and the wet heat resistance was evaluated according to the criteria below:
○: no deposition of additive observed under fluorescent lamp and green lamp;
Δ: no deposition of additive observed under fluorescent lamp, but 5 or less spots of deposition of additive per 1 cm² observed under green lamp; and
x: 5 or more spots of deposition of additive per 1 cm² observed under fluorescent lamp and green lamp.

### [Sulfidation Resistance: Stability of Regular Reflectance]

Each sample was immersed in a 10% aqueous ammonium sulfide solution for 48 hours, the regular reflectance was measured, an average value of the regular reflectance after the sulfidation was calculated, and the lightfastness was evaluated according to the criteria below.

A spectrophotometer UV265 from Shimadzu Corporation was modified by attaching an auxiliary reflectometer of integrating sphere type, the angle of incidence of incident light was adjusted to 5° with respect to the normal line of the reflective surface, and thereby the regular reflectance of each sample before the degradation treatment was measured at a reflection angle of 5°. Evaluation was made based on an average reflectivity over a range from 350 nm 700 nm.
⊚: average value of regular reflectance is 85% or larger;
○: average value of regular reflectance is 80% or larger, and smaller than 85%:
Δ: average value of regular reflectance is 75% or larger, and smaller than 80%; and
x: average value of regular reflectance is smaller than 75%.

### [Adhesiveness of layers: Weatherability]

Next, each sample was irradiated by UV using EYE Super UV tester from Iwasaki Electric Co. Ltd., under an environment of 65°C for 7 days, and the adhesiveness of the adhesive layer was evaluated according to the cross-cut exfoliation test using a cellophane tape as specified by JIS K5400. More specifically, the surface of the sample after the forced degradation was cut with a knife to form a 1-mm grid pattern, a cellophane tape (from Nichiban Co. Ltd.) was placed thereon and then lifted off. Ratio of layer-separated area was measured, and the adhesiveness of layers was evaluated according to the criteria below:
⊚: ratio of layer-separated area after forced degradation test is less than 1.0%;
⊚: ratio of layer-separated area after forced degradation test is 1.0% or more and less than 2.0%;
Δ: ratio of layer-separated area after forced degradation test is 2.0% or more and less than 3.0%; and
x: ratio of layer-separated area after forced degradation test is 3.0% or more.

Results of evaluation are shown in Tables 2 and 3.

**[Table 2]**

| Reflector for solar thermal generation No. | *A | | *B | | *C | *D | Antioxidant | *E | Contact of metal reflective layer and UV absorbing layer | Eva;latopm | | | | Remark |
|---|---|---|---|---|---|---|---|---|---|---|---|---|---|---|
| | Type | Amount of addition | Type | Amount of addition | Amount of addition | Amount of addition | Amount of addition | Amount of addition | | Light resistance | Wet and heat resistance | Sulfidation resistance | Adhesiveness of layers | |
| 1 | Tinuvin 234 | 1 | Tinuvin 1577 | 1 | 0 | 0 | 0 | 0 | No | ○ | ○ | ○ | ○ | Present Invention |
| 2 | Tinuvin 234 | 5 | Tinuvin 1577 | 10 | 0 | 0 | 0 | 0 | No | ○ | ○ | ○ | ○ | Present invention |
| 3 | Tinuvin 234 | 10 | Tinuvin 1577 | 5 | 0 | 0 | 0 | 0 | No | ○ | ○ | ○ | ○ | Present invention |
| 4 | Chimassorb 81 | 10 | Tinuvin 1577 | 5 | 0 | 0 | 0 | 0 | No | Δ | ○ | ○ | ○ | Present invention |
| 5 | Tinuvin 234 | 10 | Tinuvin 1577 | 5 | 1 | 0 | 0.1 | 0 | No | ○ | ○ | ○ | ○ | Present invention |
| 6 | Tinuvin 234 | 10 | Tinuvin 1577 | 5 | 5 | 0 | 15 | 0 | No | ○ | Δ | ○ | ○ | Present invention |
| 7 | Tinuvin 234 | 10 | Tinuvin 1577 | 5 | 5 | 0 | 0.5 | 0 | No | ⊚ | ○ | ○ | ○ | Present invention |
| 8 | Tinuvin 234 | 10 | Tinuvin 1577 | 5 | 5 | 0 | 10 | 0 | No | ⊚ | ○ | ○ | ○ | Present invention |
| 9 | Tinuvin 234 | 10 | Tinuvin 1577 | 5 | 40 | 0 | 0.5 | 0 | No | ⊚ | ○ | ○ | ○ | Present invention |
| 10 | Tinuvin 234 | 10 | Tinuvin 1577 | 5 | 40 | 0 | 10 | 0 | No | ⊚ | ○ | ○ | ○ | Present invention |
| 11 | Tinuvin 234 | 10 | Tinuvin 1577 | 5 | 25 | 0 | 5 | 0.1 | Yes | ⊚ | ○ | ⊚ | ⊚ | Present invention |
| 12 | Tinuvin 234 | 10 | Tinuvin 1577 | 5 | 25 | 0 | 5 | 10 | Yes | ⊚ | ○ | ⊚ | ⊚ | Present invention |
| 13 | Tinuvin 234 | 10 | Tinuvin 1577 | 5 | 25 | 0 | 5 | 0.05 | Yes | ⊚ | ○ | ⊚ | ○ | Present invention |
| 14 | Tinuvin 234 | 10 | Tinuvin 1577 | 5 | 25 | 0 | 5 | 13 | Yes | ⊚ | ○ | ⊚ | ○ | Present invention |
| 15 | Tinuvin 234 | 10 | Tinuvin 1577 | 5 | 0 | 5 | 0.5 | 0 | No | ○ | ○ | ○ | ○ | Present invention |
| 16 | Tinuvin 234 | 15 | - | 0 | 0 | 0 | 0 | 0 | No | × | ○ | Δ | × | Comparative Example |
| 17 | - | 0 | Tinuvin 1577 | 15 | 0 | 0 | 0 | 0 | No | × | ○ | Δ | × | Comparative Example |
| 18 | Tinuvin 234 | 10 | Tinuvin 1577 | 10 | 0 | 0 | 0 | 0 | No | × | × | Δ | × | Comparative Example |

| | | | | | | | | | | | | | | |
|---|---|---|---|---|---|---|---|---|---|---|---|---|---|---|
| *A: UV absorber with absorption maximum in UV-A region *B: Triazine-based UV absorber *C: Hexamethylenediisocyanate *D: *m*-Xylylene diisocyanate *E: Silane coupling agent 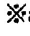 amount of addition given in % by mass | | | | | | | | | | | | | | |

**[Table 3]**

| Reflector for solar thermal generation No. | UV absorbing layer 1 | | | | UV absorbing layer 2 | | UV absorbing layer 3 | | Common to UV absorbing layers 1, 2 and 3 | | | Evaluation | | | | Remark |
|---|---|---|---|---|---|---|---|---|---|---|---|---|---|---|---|---|
| | UV absorber | | *E | Contact with metal reflective layer | UV absorber | | UV absorber | | Antioxidant | *C | *D | Ught resistance | Wet and heat resistance | Sulfidation resistance | Adhesiveness of layer | |
| | Type | Amount of addition | Amount of addition | | Type | Amount of addition | Type | Amount of addition | Amount of addition | Amount of addition | Amount of addition | | | | | |
| 19 | Tinuvin 234 | 1 | 0 | No | Tinuvin 1577 | 1 | - | 0 | 0 | 0 | 0 | ○ | ○ | ○ | ○ | Present invention |
| 20 | Tinuvin 234 | 5 | 0 | No | Tinuvin 1577 | 10 | - | 0 | 0 | 0 | 0 | ○ | ○ | ○ | ○ | Present invention |
| 21 | Tinuvin 234 | 10 | 0 | No | Tinuvin 1577 | 5 | - | 0 | 0 | 0 | 0 | ○ | ○ | ○ | ○ | Present invention |
| 22 | Chimassorb 81 | 10 | 0 | No | Tinuvin 1577 | 5 | - | 0 | 0 | 0 | 0 | Δ | ○ | ○ | ○ | Present invention |
| 23 | Tinuvin 234 | 10 | 0 | No | Tinuvin 1577 | 5 | - | 0 | 0.5 | 5 | 0 | ⊚ | ○ | ○ | ○ | Present invention |
| 24 | Tinuvin 234 | 10 | 0 | No | Tinuvin 1577 | 5 | - | 0 | 10 | 5 | 0 | ⊚ | ○ | ○ | ○ | Present invention |
| 25 | Tinuvin 234 | 10 | 0 | No | Tinuvin 1577 | 5 | - | 0 | 0.5 | 40 | 0 | ⊚ | ○ | ○ | ○ | Present invention |
| 26 | Tinuvin 234 | 10 | 0 | No | Tinuvin 1577 | 5 | - | 0 | 10 | 40 | 0 | ⊚ | ○ | ○ | ○ | Present invention |
| 27 | Tinuvin 234 | 10 | 0.1 | Yes | Tinuvin 1577 | 5 | - | 0 | 5 | 25 | 0 | ⊚ | ○ | ⊚ | ⊚ | Present invention |
| 28 | Tinuvin 234 | 10 | 10 | Yes | Tinuvin 1577 | 5 | - | 0 | 5 | 25 | 0 | ⊚ | ○ | ⊚ | ⊚ | Present invention |
| 29 | Tinuvin 234 | 10 | 0.05 | Yes | Tinuvin 1577 | 5 | - | 0 | 5 | 25 | 0 | ⊚ | ○ | ⊚ | ○ | Present invention |
| 30 | Tinuvin 234 | 10 | 13 | Yes | Tinuvin 1577 | 5 | - | 0 | 5 | 25 | 0 | ⊚ | ○ | ⊚ | ○ | Present invention |
| 31 | Tinuvin 234 | 10 | 5 | Yes | Tinuvin 1577 | 5 | Tinuvin 234 | 10 | 5 | 25 | 0 | ⊚ | ○ | ⊚ | ⊚ | Present invention |
| 32 | Tinuvin 234 | 10 | 0 | No | Tinuvin 1577 | 5 | - | 10 | 10 | 0 | 5 | ○ | ○ | ○ | ○ | Present invention |
| 33 | Tinuvin 234 | 20 | 0 | No | Tinuvin 1577 | 15 | - | 0 | 0 | 0 | 0 | × | × | Δ | × | Comparative Example |
| 34 | Tinuvin 1577 | 5 | 0 | No | Tinuvin 234 | 10 | - | 0 | 0 | 0 | 0 | × | ○ | × | × | Comparative Example |
| 35 | Tinuvin 1577 | 5 | 5 | Yes | Tinuvin 234 | 10 | Tinuvin 234 | 10 | 5 | 25 | 0 | × | ○ | × | × | Comparative Example |

| | | | | | | | | | | | | | | | | |
|---|---|---|---|---|---|---|---|---|---|---|---|---|---|---|---|---|
| *C: Hexamethylenediisocyanate *D: *m*-Xylylene diisocyanate *E: Silane coupling agent 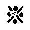 amount of addition given in % by mass | | | | | | | | | | | | | | | | |

As is clear from Table 2, the reflectors for solar heat generation 1 to 15 (present invention), configured so that at least one resin layer formed on the incident side of a metal reflective layer, composed of a silver layer, contains 1% by mass or more each of the triazine-based UV absorber and the UV absorber with an absorption maximum in the UV-A region (320 to 400 nm), with a total content of the UV absorbers in the resin layer (s) of 15% by mass or less of resin, kept large values of regular reflectance after UV irradiation, whereas, the reflectors for solar heat generation 16 and 17 (Comparative Examples), configured to have the UV absorbing layer containing only either one of the triazine-based UV absorber and the UV absorber with an absorption maximum in the UV-A region (320 to 400 nm), showed small values of regular reflectance after UV irradiation.

This is supposedly because the combined use of the triazine-based UV absorber and the UV absorber with an absorption maximum in the UV-A region (320 to 400 nm) successfully blocked UV in the UV-B region (290 to 320 nm) and UV-A region (320 to 400 nm), and effectively suppressed distortion, due to degradation, of the resin base disposed on the counter incident side of the silver layer.

It is also understood that the reflector for solar heat generation 18 (Comparative Example), containing more than 15% by mass in total of the UV absorbers in a single UV absorbing layer, caused bleed-out, followed by reduction in the adhesiveness of layers, and finally resulted in distortion of the film mirror as a whole, to thereby lower the regular reflectance.

From comparison between the reflectors for solar heat generation 3 and 4 (present inventions), as the UV absorber with an absorption maximum in the UV-A region (320 to 400 nm), Tinuvin 234 was found to give better regular reflectance after UV irradiation than CHIMASSORB 81. This is supposedly because the triazine-based UV absorber represented by Tinuvin 234 is generally superior to the benzophenone-based UV absorber represented by CHIMASSORB 81 in UV resistance.

The reflectors for solar heat generation 7 to 14 (present inventions), representing the cases of containing 5 to 40% by mass, relative to the resin, of the diisocyanate-based crosslinking agent in the UV absorbing layer, and of containing 0.5 to 10% by mass, relative to the resin, of the antioxidant, were found to show highest levels of regular reflectance, since the UV absorbing layers were made stronger and the UV absorber were suppressed to be degraded due to oxidation.

Comparison between the reflectors for solar heat generation 7 and 15 (present inventions) teaches that the reflector for solar heat generation 15 caused a slight color change after UV irradiation due to use of an aromatic diisocyanate, whereas the reflector for solar heat generation 7 using an aliphatic diisocyanate caused no color change, and good regular reflectance after UV irradiation. The aliphatic diisocyanate is therefore understood as a better crosslinking agent.

In the reflectors for solar heat generation 11 to 14 (present inventions), representing the case where the UV absorbing layer is in contact with the silver layer, the silver layer showed sulfidation resistance better than that shown by the anti-corrosion layer, containing a mercapto-based anticorrosive, of the reflectors for solar heat generation 1 to 10 (present inventions). It is also understood that the UV absorbing layer containing the amino group-containing silane coupling agent largely improves the adhesiveness between the silver layer and the UV absorbing layer.

As is clear from Table 3, the reflectors for solar heat generation 19 to 32 (present inventions), representing the case where the triazine-based UV absorber and the UV absorber with an absorption maximum in the UV-A region (320 to 400 nm) are contained in different resin layers, and the resin layer containing the triazine-based UV absorber is disposed on the incident side of at least one resin layer containing the UV absorber with an absorption maximum in the UV-A region, were maintained to show high values of regular reflectance after UV irradiation, since the triazine-based UV absorber having higher UV resistance, disposed on the incident side, suppressed degradation of the UV absorber with an absorption maximum in the UV-A region disposed on the counter-incident side.

On the other hand, the reflectors for solar heat generation 34 to 35 (Comparative Examples), having UV absorbing layer containing the triazine-based UV absorber, disposed on the counter incident side of the UV absorber with an absorption maximum in the UV-A region, showed low values of regular reflectance after UV irradiation, since the UV absorber with an absorption maximum in the UV-A region, contained in the layer disposed on the incident side, tends to cause UV degradation.

The reflectors for solar heat generation 33 (Comparative Example), representing the case where a single resin layer contains 15% by mass or more UV absorber, caused bleed-out and degraded flatness of layers due to degraded adhesiveness of layers, resulting in a low value of regular reflectance after UV irradiation.

Comparison between the reflectors for solar heat generation 21 and 22 revealed that, as the UV absorber with an absorption maximum in the UV-A region (320 to 400 nm), Tinuvin 234 showed better regular reflectance after UV irradiation than CHIMASSORB 81. This is possibly because the triazine-based UV absorber represented by Tinuvin 234 is generally superior to the benzophenone-based UV absorber represented by CHIMASSORB 81 in UV resistance.

The reflectors for solar heat generation 23 to 32, representing the cases of containing 5 to 40% by mass, relative to the resin, of the diisocyanate-based crosslinking agent in the UV absorbing layer, and of containing 0.5 to 10% by mass, relative to the resin, of the antioxidant, were found to show highest levels of regular reflectance, since the UV absorbing layers were made stronger, and the UV absorber were suppressed to be degraded due to oxidation.

Now, comparison between the reflectors for solar heat generation 24 and 32 teaches that the reflector for solar heat generation 32 caused a slight color change after UV irradiation due to use of an aromatic diisocyanate, whereas the reflector for solar heat generation 24 using an aliphatic diisocyanate caused no color change, and showed good regular reflectance after UV irradiation. The aliphatic diisocyanate is therefore understood as a better crosslinking agent.

In the reflectors for solar heat generation 27 to 31, representing the case where the UV absorbing layer is brought into contact with the silver layer, the silver layer showed sulfidation resistance better than that shown by the anti-corrosion layer, containing a mercapto-based anticorrosive, of the reflectors for solar heat generation 19 to 26. It is also understood that the UV absorbing layer containing the amino group-containing silane coupling agent largely improves the adhesiveness between the silver layer and the UV absorbing layer.

### INDUSTRIAL APPLICABILITY

The thus-configured present invention is applicable to a film mirror for solar heat generation designed to reflect sunlight, a method of manufacturing the same, and a reflector for solar heat generation.

### EXPLANATION OF SYMBOLS

| | |
|---|---|
| 1 | resin base |
| 2 | silver reflective layer |
| 3 | anti-corrosion layer |
| 4 | UV absorbing layer |
| 5 | UV absorbing layer-1 |
| 6 | UV absorbing layer-2 |
| 7 | UV absorbing layer-3 |
| 8 | hard coat layer |
| 10 | film mirror for solar heat generation |

## Claims

1. A film mirror for solar heat generation, comprising a metal reflective layer and at least one resin layer provided on an incident side of the metal reflective layer, wherein;
the metal reflecting layer comprises a silver layer,
the at least one resin layer contains a triazine-based UV absorber by 1% by mass of the resin and a UV absorber having an absorption maximum in a UV-A region (320 to 400 nm) by 1% by mass of the resin, and
a total content of the UV absorbers in the resin layer(s) is 15% or less by mass of the resin.

2. The film mirror for solar heat generation according to Claim 1, wherein the UV absorber having the absorption maximum in the UV-A region (320 to 400 nm) is a benzotriazole-based UV absorber.

3. The film mirror for solar heat generation according to Claim 2, wherein at least one resin layer contains both of the triazine-based UV absorber and the benzotriazole-based UV absorber.

4. The film mirror for solar heat generation according to Claim 3, wherein the resin layer containing both of the triazine-based UV absorber and the benzotriazole-based UV absorber further contains an aliphatic diisocyanate-based crosslinking agent by 5 to 40% by mass of the resin and an antioxidant by 0.5 to 10% by mass of the resin.

5. The film mirror for solar heat generation according to Claim 3 or 4, wherein;
the resin layer containing both of the triazine-based UV absorber and the benzotriazole-based UV absorber further contains an amino group-containing silane coupling agent by 0.1 to 10% by mass of the resin, and
the resin layer is brought into contact with the metal reflective layer.

6. The film mirror for solar heat generation according to Claim 1, wherein;
the triazine-based UV absorber and the UV absorber having the absorption maximum in the UV-A region (320 to 400 nm) are contained in different resin layers, respectively,
the resin layer containing the triazine-based UV absorber is disposed on the incident side of the at least one resin layer containing the UV absorber having the absorption maximum in the UV-A region, and
the total content of the UV absorbers in the resin layers is 1 to 15% by mass of the resin.

7. The film mirror for solar heat generation according to Claim 6, wherein the UV absorber having the absorption maximum in the UV-A region (320 to 400 nm) is a benzotriazole-based UV absorber.

8. The film mirror for solar heat generation according to Claim 7, wherein the resin layer containing one of the triazine-based UV absorber and the benzotriazole-based UV absorber further contains an aliphatic diisocyanate-based crosslinking agent by 5 to 40% by mass of the resin and an antioxidant by 0.5 to 10% by mass of the resin.

9. The film mirror for solar heat generation according to Claim 7 or 8, wherein;
the resin layer containing one of the triazine-based UV absorber and the benzotriazole-based UV absorber further contains an amino group-containing silane coupling agent by 0.1 to 10% by mass of the resin, and
the resin layer is brought into contact with the metal reflective layer.

10. A method for manufacturing the film mirror for solar heat generation according to any one of Claims 1 to 9, the method comprising forming the metal reflective layer by vapor deposition of silver.

11. A reflector for solar heat generation comprising the film mirror for solar heat generation according to any one of Claims 1 to 9, wherein the film mirror is bonded with a metal support through an adhesive layer therebetween.
